(19) Europäisches Patentamt
European Patent Office
Office européen des brevets

(11) **EP 0 739 088 A2**

(12) **EUROPÄISCHE PATENTANMELDUNG**

(43) Veröffentlichungstag:
23.10.1996 Patentblatt 1996/43

(51) Int. Cl.$^6$: **H02P 21/00**, H02P 7/63

(21) Anmeldenummer: 96105935.9

(22) Anmeldetag: 16.04.1996

(84) Benannte Vertragsstaaten:
AT BE CH DE DK ES FI GR IT LI NL SE

(30) Priorität: 22.04.1995 DE 19514897

(71) Anmelder: ABB
PATENT GmbH
D-68309 Mannheim (DE)

(72) Erfinder:
• Wiesemann, Joachim
45881 Gelsenkirchen (DE)

• Depenbrock, Manfred
44797 Bochum (DE)
• Maischak, Dieter
91085 Weisendorf (DE)

(74) Vertreter: Rupprecht, Klaus, Dipl.-Ing. et al
c/o ABB Patent GmbH,
Postfach 10 03 51
68128 Mannheim (DE)

(54) **Verfahren für eine gemäss der direkten Selbstregelung betriebene Drehfeldmaschine**

(57) Es wird ein Verfahren für eine gemäß der direkten Selbstregelung betriebene Drehfeldmaschine vorgeschlagen, die an einen mit eingeprägter Eingangs-Spannung gespeisten Wechselrichter angeschlossen ist. Ein zyklisch durchlaufener erster Steuervektor wird mit einer der Pulszahl des Wechselrichters entsprechenden Anzahl von diskreten Lagen des Spannungs-raumzeigers gebildet. Ein Weiterschalten dieses ersten Steuervektors in die nächste diskrete Lage erfolgt, wenn der Fluß-Istwert den Fluß-Sollwert übersteigt. Der Wechselrichter wird durch einen Drehmomentregler zwischen dem ersten Steuervektor und einem dem Spannungszustand Null entsprechenden zweiten Steuervektor im Sinne einer Zweipunktregelung hin- und hergeschaltet. Dem Drehmoment-Zweipunktregler ist eine Strangstrombegrenzung unterlagert, die nur dann eingreift, wenn der größte Strangstrombetrag eine vorgegebene Stromgrenze überschreitet und bei motorischem Drehmoment den zweiten Steuervektor sowie bei generatorischem Drehmoment den von der Flußführung vorgegebenen ersten Steuervektor vorgibt.

Fig.1

EP 0 739 088 A2

## Beschreibung

Die Erfindung bezieht sich auf ein Verfahren für eine gemäß der direkten Selbstregelung betriebene Drehfeldmaschine gemäß dem Oberbegriff des Anspruchs 1.

Ein solches Verfahren ist aus der DE 34 38 504 C2 bekannt.

Die direkte Selbstregelung (DSR) ist ein indirekt feldorientiertes Regelverfahren für den Spannungsstellbereich, bei dem ein von der Flußführung unabhängiger asynchroner Drehmoment-Zweipunktregler die zulässige mittlere Schaltfrequenz in jedem Betriebspunkt optimal ausnutzt. Der Gesamtflußraumzeiger wird dabei auf einer sechseckigen Bahnkurve geführt, wofür die minimal mögliche Zahl an Schalthandlungen, nämlich ein Schaltspiel pro Strang und Ständerperiode, erforderlich ist, so daß ein Maximum an Schaltfrequenz für die Drehmomentregelung zur Verfügung steht.

Die DSR kennzeichnet außer einer minimalen Drehmoment-Schwankungsweite, ermöglicht durch die optimale Schaltfrequenzausnutzung, auch eine sehr gute Führungsdynamik und ein sehr gutes Störverhalten, da der Drehmomentregler z.B. bei Spannungsschwankungen sofort reagieren kann. Die von der Drehmomentregelung unabhängige Flußführung ergibt einen weiteren Freiheitsgrad und ermöglicht die Wahl des Gesamtflußbetrags nach einem beliebigen Optimalkriterium.

Der Erfindung liegt die Aufgabe zugrunde, ein Verfahren für eine gemäß der direkten Selbstregelung betriebene Drehfeldmaschine der eingangs genannten Art anzugeben, das eine Erhöhung der Stromausnutzung des Wechselrichters bewirkt.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß durch die dem Drehmoment-Zweipunktregler unterlagerte Strangstrombegrenzung bei unverändertem Strangstromscheitelwert-ein höheres mittleres Drehmoment als bei drehmomentgeregeltem Betrieb erreicht wird. Das Leistungsvermögen der Baukomponenten wird voll ausgenutzt. Durch Maximierung der Stromausnutzung ist es bei einer vorgegebenen Antriebsleistung möglich, einen Stromrichter für einen geringeren Spitzenstrom auszulegen, als dies bei der herkömmlichen DSR möglich wäre. Dadurch können sowohl Kosten als auch Einbauraum und Gewicht gespart werden.

In Betriebspunkten, in denen der größte Strangstrombetrag zu jedem Zeitpunkt unterhalb der projektierten Stromgrenze liegt, wird weiterhin mit dem Drehmoment-Zweipunktregler das mittlere Moment konstant gehalten. Ein abrupter Übergang zum Betrieb mit konstantem größten Strangstrombetrieb wird vermieden.

Die Erfindung wird anhand der in der Zeichnung dargestellten Ausführungsbeispiele erläutert. Es zeigen:

Fig. 1   ein Schema der Signalverarbeitung,
Fig. 2   den zeitlichen Verlauf des Drehmomentbandes und der Bandverschiebung,
Fig. 3   die Raumzeiger des Gesamtflusses, der Ständerspannung und des Ständerstromes.

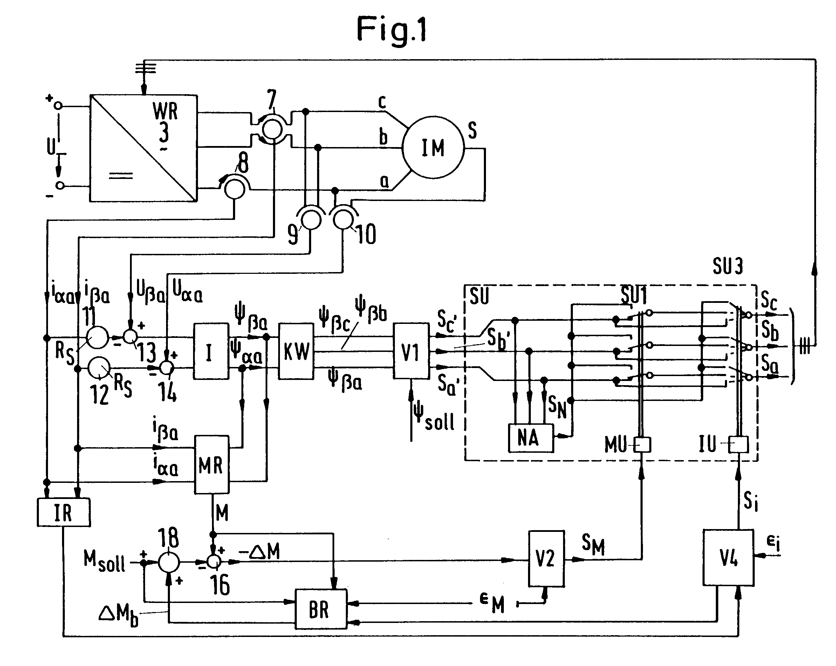

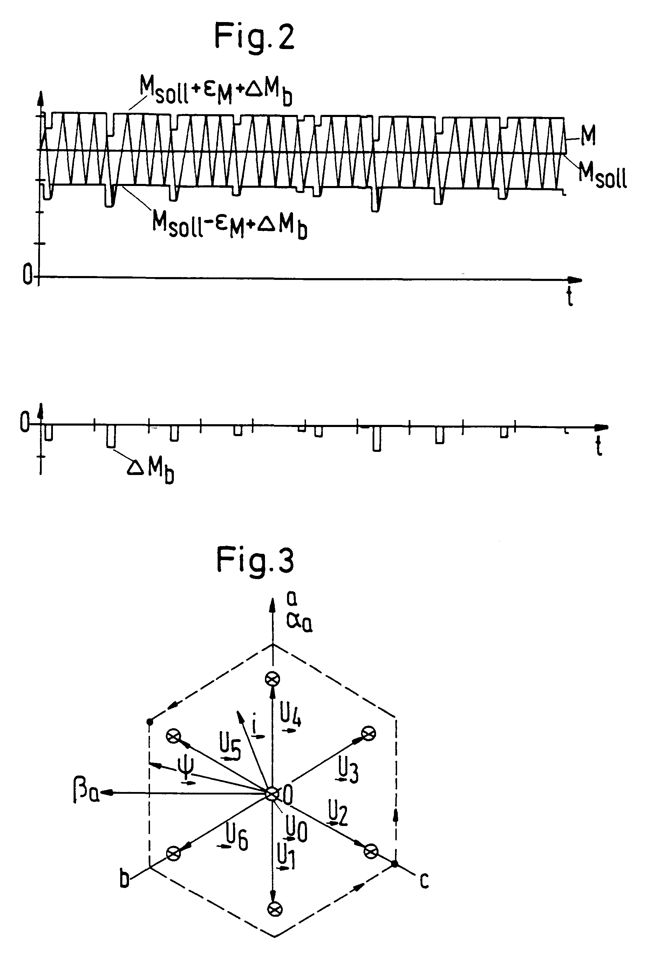

In Fig. 1 ist ein Schema der Signalverarbeitung dargestellt. Es ist ein dreiphasiger Wechselrichter WR gezeigt, an dem eingangsseitig eine Eingangsgleichspannung U_ anliegt und der ausgangsseitig die den ruhenden Ständerwicklungsachsen a, b, c zugeordneten Wicklungen (siehe auch Fig. 3) einer Induktionsmaschine IM mit dreiphasiger Wechselspannung versorgt. Der Schaltzustand des Wechselrichters, d.h. der eingeschaltete Augenblickswert des Spannungsraumzeigers $\underline{u}$ wird durch logische Kombination der Schaltzustandsvariablen $S_a{'}$, $S_b{'}$, $S_c{'}$ bzw. $S_a$, $S_b$, $S_c$, bestimmt.

Zur Erfassung der Ständerstromkomponente $i_{\beta a}$ (= Projektion des Ständerstromraumzeigers $\underline{i}$ auf die $\beta_a$-Achse, siehe auch Fig. 3) dient ein Stromwandler 7, durch den die Ströme der den Ständerwicklungsachsen b und c zugeordneten Wicklungen fließen. Der durch die Wicklung der Ständerwicklungsachse a fließende Strom, d.h. die Ständerstromkomponente $i_{\alpha a}$ (= Projektion des Ständerstromraumzeigers auf die $\alpha_a$-Achse, siehe auch Fig. 3) wird durch einen Stromwandler 8 erfaßt.

Die Ständerspannungskomponente $u_{\beta a}$ (= Projektion des Spannungsraumzeigers $\underline{u}$ (t) auf die $\beta_a$-Achse) wird durch einen Spannungswandler 9 ermittelt, dessen Klemmen mit den zu den Ständerwicklungsachsen b und c zugehörigen Wicklungen verbunden sind. Zur Erfassung der Ständerspannungskomponente $u_{\alpha a}$ (= Projektion des Spannungsraumzeigers $\underline{u}$ (t) auf die $\alpha_a$-Achse) dient ein Spannungswandler 10, dessen Klemmen mit der zur Ständerwicklungsachse a gehörenden Wicklung sowie mit dem Sternpunkt S der Maschine IM verbunden ist.

Die Ständerstromkomponenten $i_{\beta a}$ bzw. $i_{\alpha a}$ werden mit Hilfe von Multiplizierern 11 bzw. 12 mit dem Ständerwicklungswiderstand $R_S$ multipliziert und die Produkte werden mit negativen Vorzeichen Vergleichsstellen 13 bzw. 14 zugeleitet. Diesen Vergleichsstellen 13 bzw. 14 liegen mit positivem Vorzeichen die Ständerspannungskomponenten $u_{\beta a}$ bzw. $u_{\alpha a}$ an. Die Differenzsignale $u_{\beta a}-i_{\beta a} \cdot R_S$ bzw. $u_{\alpha a}-i_{\alpha a} \cdot R_S$ der Vergleichsstellen 13 bzw. 14 werden einem Integrator I zugeführt.

Der Integrator I bildet hieraus die Flußkomponenten $\psi_{\beta \alpha}$ und $\psi_{\alpha a}$ des Gesamtflußraumzeigers $\underline{\psi}$ (siehe auch Fig. 3) und leitet diese einem Komponentenwandler KW zu. Der Komponentenwandler KW ermittelt hieraus die Flußkomponenten $\psi_{\beta a}$, $\psi_{\beta b}$, *und* $\psi_{\beta c}$ und führt diese einem Vergleicher V1 zu. Der Vergleicher V1 liefert Schaltzustandsvariable $S_a{'}$, $S_b{'}$, $S_c{'}$ an den Wechselrichter WR in Abhängigkeit des Vergleichs zwischen $\psi_{\beta a}$, $\psi_{\beta b}$, $\psi_{\beta c}$ und dem Ständerfluß-Sollwert $\psi_{soll}$ (= Führungsgröße für den Flußbetrag). Die Schaltzustandsvariablen $S_a'$, $S_b'$, $S_c'$ geben die einzelnen Spannungsraumzeigerwerte $\underline{U}_0 \ldots \underline{U}_6$ (siehe auch Fig. 3) vor.

Die Ständerstromkomponenten $i_{\alpha a}$, $i_{\beta a}$ und die Flußkomponenten $\psi_{\beta a}$, $\psi_{\alpha a}$ werden einem Momentrechner MR zugeführt, der den Istwert des inneren Drehmoments M aus dem Augenblickswert der Ständerströme und der resultierenden Flußverkettungen bildet.

Diese im Momentrechner MR gebildete Größe wird in einer Vergleichsstelle 16 mit der Summe aus dem vorzugebenden Drehmoment-Sollwert $M_{soll}$ und einer Bandverschiebung $\Delta M_b$ verglichen.

Im Spannungsstellbereich (Grunddrehzahlbereich) ergibt sich dann eine einfache Regelung nach folgender Vorschrift: Übersteigt der Istwert des inneren Moments M die in der Additionsstelle 18 gebildete Summe $M_{soll} + \Delta M_b$ um mehr als einen zugelassenen Toleranzwert $\varepsilon_M$, so ist anstelle des durch die Flußselbstregelung aus den sechs äußeren Raumzeigerwerten der Maschinenspannung bestimmten aktuellen Raumzeigerwertes ($S_a = S_a'$, $S_b = S_b'$, $S_c = S_c'$) der siebte Raumzeigerwert mit dem Betrag Null solange einzuschalten ($S_a = S_b = S_c = S_N$), bis der Istwert des Momentes den Sollwert um mehr als $\varepsilon_M$ unterschreitet. Danach bestimmt wieder die Flußselbstregelung den Schaltzustand des Wechselrichters.

Bei der Strukturdarstellung in Fig. 1 wird die Regelabweichung $\Delta_M = M_{soll} + \Delta_{Mb} - M$ in einem Drehmoment-Vergleicher V2 mit dem Toleranzwert $\varepsilon_M$ verglichen und die Änderungen der Schaltzustände werden durch die vom Vergleicher V2 abgegebene Schaltvariable $S_M$ über die symbolisch dargestellte momentabhängige Umschalteinrichtung MU bewirkt, indem der Schalter SU1 des Signalumschalters SU entweder die Schaltzustandsvariablen $S_a'$, $S_b'$, $S_c'$ (zur Bildung der Spannungsraumzeigerwerte $\underline{U}_1 \ldots \underline{U}_6$) oder die von der Nullzustandsauswahl NA abgegebene Schaltzustandsvariable $S_N$ (zur Bildung des Spannungsraumzeigerwertes $\underline{U}_0$) durchschaltet.

Der siebte Spannungraumzeigerwert $\underline{U}_0$ mit dem Betrag 0 kann durch zwei verschiedene Schaltzustände verwirklicht werden. Durch entsprechende Auswahlkriterien lassen sich Nebenbedingungen erfüllen, wie z.B. minimale Schalthäufigkeit, Gewährleistung von Schaltzustand-Minimalzeiten usw.. Zu den Spannungsraumzeigern, Stromraumzeiger und zum Gesamtflußraumzeiger wird allgemein auf Fig. 3 verwiesen.

Das vorstehend beschriebene Schema der Signalverarbeitung ist mit Ausnahme der zusätzlichen Summierung von $M_{soll}$ mit $\Delta M_b$ aus der DE 34 38 504 C2 bekannt. Zur Erläuterung der Funktionsweise der direkten Selbstregelung (DSR) wird auf diese Patentschrift verwiesen. In dieser Patentschrift sind darüber hinaus weitere Varianten behandelt.

Die Spannungen $U_{\alpha a}$, $U_{\beta a}$ können alternativ zur Erfassung mittels Spannungswandlern 9, 10 auch über ein Wechselrichter-Modell aus U_ und $S_a$, $S_b$, $S_c$ berechnet werden.

Um eine Drehmomentregelung mit Strangstrombegrenzung zu realisieren, wird mittels eines Stromrechners IR der größte Strangstrombetrag aus den Ständerstromkomponenten $i_{\alpha a}$, $i_{\beta a}$ ermittelt. Ein Vergleicher V4 führt einen Vergleich des größten Strangstrombetrags mit einer vorgegebenen Stromgrenze durch, welche durch einen Grenzwert $\varepsilon_i$ für den Strombetrag definiert ist. Überschreitet der größte Strangstrombetrag die vorgegebene Stromgrenze, gibt der Vergleicher V4 eine Schaltvariable $S_i$ für stromabhängige Umschaltung an eine stromabhängige Umschaltung IU. Hierdurch wird mittels des Signalumschalters SU3 eine Spannung geschaltet, die zur Verringerung des Strombetrags führt. Das ist bei motorischem Drehmoment eine Nullspannung (siehe obere Position der Schalter SU3), bei generatorischem Drehmoment die Außenspannung, welche von der Flußführung vorgegeben wird (siehe untere Position der Schalter SU3). Wird die Stromgrenze nicht überschritten, befinden sich die Schalter SU3 in der mittleren Position.

Alternativ zum System IU/SU3 kann der Vergleicher V4 auch auf den Vergleicher V2 einwirken, wodurch die Schaltvariable $S_M$ in Abhängigkeit der Regelabweichung $-\Delta M$, des Toleranzwertes $\varepsilon_M$ und der Ausgangsgröße des Vergleichers V4 vorgegeben wird. Die stromabhängige Umschaltung IU und der Signalumschalter SU3 entfallen bei dieser alternativen Ausbildung.

Nach dem Verlassen der Stromgrenze kann das Wiedereinschalten der vorherigen Spannung direkt durch den Drehmoment-Zweipunktregler erfolgen. Hierfür muß das durch $\varepsilon_M$ definierte Drehmomentband für die Dauer der Strombegrenzung so verschoben werden, daß das Drehmoment die neue Bandgrenze zum gewünschten Zeitschaltpunkt erreicht. Damit der Schaltfrequenzregler auch bei dauerndem Betrieb an der Stromgrenze weiterhin im Eingriff bleibt, wird das Band so verschoben, daß das Drehmoment bis zum Wiedereinschalten einmal die gesamte Drehmoment-Bandbreite $2\varepsilon_M$ überstreicht. Dazu muß zum Drehmomentsollwert $M_{soll}$ die Bandverschiebung $\Delta M_b$ addiert werden, die beim Auslösen einer strombegrenzenden Schaltung auf die Differenz zwischen dem momentanen Drehmomentistwert M und der Bandobergrenze $M_{soll} + \varepsilon_M$ gesetzt wird:

$$\Delta M_b = M - (M_{soll} + \varepsilon_M)$$

für $M_{soll} < 0$ gilt

$$\Delta M_b = M - (M_{soll} - \varepsilon_M).$$

Beim Wiedereinschalten nach einer Strangstrombegrenzung wird diese Bandverschiebung wieder zu Null gesetzt.

Zur Berechnung der Bandverschiebung $\Delta M_b$ dient ein Bandverschiebungsrechner BR, dem eingangsseitig M, $\varepsilon_M$ und $M_{soll}$ anliegen und der vom Vergleicher V4 aktiviert wird, sobald der größte Strangstrombetrag die vorgegebene Stromgrenze überschreitet.

In Fig. 2 sind die mit dieser Regelstrategie "dem Drehmoment-Zweipunktregler der DSR ist eine Strangstrombegrenzung unterlagert, die nur eingreift, wenn der größte Strangstrombetrag die Stromgrenze überschreitet" erreichten Zeitverläufe für einen Betriebspunkt dargestellt, bei dem in jedem Sektor ca. zwei Schaltungen durch die Strombegrenzung ausgelöst werden. Es sind die obere Bandgrenze $M_{soll} + \varepsilon_M + \Delta M_b$, die untere Bandgrenze $M_{soll} - \varepsilon_M + \Delta M_b$, der Istwert des Drehmoments M, der Drehmoment-Sollwert $M_{soll}$ und die für jede Strangstrombegrenzung neu ermittelten Bandverschiebungen $\Delta M_b$ zu erkennen.

In Betriebspunkten, in denen keine Strombegrenzung auftritt, entspricht das Verhalten dieser Regelstruktur exakt dem der DSR mit Drehmoment-Zweipunktregler. Bei Erhöhung des Drehmoment-Sollwerts treten ab einem Grenzwert einzelne Schaltungen zur Begrenzung des größten Strangstrombetrags auf. Bei weiterer Erhöhung des Drehmomentsollwerts nimmt die Anzahl dieser Schaltungen zu, bis schließlich alle Schaltungen an der oberen Grenze bzw. bei negativem Drehmoment an der unteren Grenze des Hysteresebandes der Strombegrenzung dienen und man den Betrieb mit ständiger Strombegrenzung erreicht.

Das Verhalten im Übergangsbereich kann durch stückweises Aneinandersetzen von Zeitbereichen mit Drehmomentregelung und Zeitbereichen mit Stromoegrenzung beschrieben werden. Variiert man nun die Anteile der beiden Verfahren, erhält man einen stetigen Übergang zwischen den beiden Betriebsarten, wobei alle stationären Größen im Übergangsbereich zwischen den jeweiligen Werten für die einzelnen Betriebsarten liegen. Durch diesen stetigen Übergang von reiner Drehmomentregelung zur ständiger Strombegrenzung werden im Übergangsbereich automatisch die nachteiligen Auswirkungen der Strombegrenzung minimiert.

Der Mittelwert des Drehmoments ist bei ständiger Strombegrenzung höher, als er es bei Betrieb mit Drehmoment-Zweipunktregler und gleichem Strangstromscheitelwert ist.

Dem Absinken des Drehmomentmittelwerts bei Strombegrenzung durch den Einfluß der Schaltfrequenz steht ein Ansteigen des Strangstromscheitelwerts bei Betrieb mit Drehmoment-Zweipunktregler gegenüber. Will man die Strangstromscheitelwerterhöhung bei der Betriebsart mit Drehmoment-Zweipunktregler nicht zulassen, muß man bei Verringerung das mittlere Drehmoment absenken.

Der Einsatz der Erfindung ist selbstverständlich nicht auf das vorstehend beschriebene Ausführungsbeispiel einer Direkten Selbstregelung beschränkt. Die Erfindung ist vielmehr beispielsweise auch bei der in eb Elektrische Bahnen 92 (1994) 1/2 Seiten 24 bis 36 behandelten "DSR bei Flußbahnkurve mit Eckeneinklappung" vorteilhaft einsetzbar. Durch Verwendung einer achtzehneckigen Flußbahnkurve kann bei der Drehmomentregelung das Auftreten einer Harmonischen mit mehrfacher Ständerfrequenz im Zwischenkreisstrom verhindert oder verringert werden. Bei einem Einklappwinkel von 11,25° tritt im Zwischenkreisstrom vorteilhaft keine Harmonische mit sechsfacher Ständerfrequenz auf. Bei ständiger Strombegrenzung wird diese Harmonische im Drehmoment stark verringert. Bei einem Einklappwinkel von 11,25° weist sie nur noch $\approx 60\%$ des Wertes auf, der ohne Einklappwinkel auftritt. Daraus wird ersichtlich, daß sich die Strombegrenzung vorteilhaft mit der Eckeneinklappung kombinieren läßt.

**Patentansprüche**

1.  Verfahren für eine gemäß der direkten Selbstregelung betriebene Drehfeldmaschine, die an einen mit eingeprägter Eingangs-Spannung gespeisten Wechselrichter angeschlossen ist, wobei ein zyklisch durchlaufener erster Steuervektor mit einer der Pulszahl des Wechselrichters entsprechenden Anzahl von diskreten Lagen des Spannungsraumzeigers gebildet wird und ein Weiterschalten dieses ersten Steuervektors in die nächste diskrete Lage erfolgt, wenn der Fluß-Istwert den Fluß-Sollwert übersteigt und wobei der Wechselrichter durch einen Drehmomentregler zwischen dem ersten Steuervektor und einem dem Spannungszustand Null entsprechenden zweiten Steuervektor im Sinne einer Zweipunktregelung hin- und hergeschaltet wird, <u>dadurch gekennzeichnet,</u> daß dem Drehmoment-Zweipunktregler eine Strangstrombegrenzung unterlagert ist, die nur dann eingreift, wenn der größte Strangstrombetrag eine vorgegebene Stromgrenze überschreitet und bei motorischem Drehmoment den zweiten Steuervektor sowie bei generatorischem Drehmoment den von der Flußführung vorgegebenen ersten Steuervektor vorgibt.

2.  Verfahren nach Anspruch 1, dadurch gekennzeichnet, daß das Drehmomentband für die Dauer der Strombegrenzung verschoben wird, indem zum Drehmoment-Sollwert ($M_{soll}$) eine Bandverschiebung ($\Delta M_b$) addiert wird, die beim Auslösen einer strombegrenzenden Schaltung auf die Differenz zwischen dem Drehmoment-Istwert (M) und der Bandobergrenze ($M_{soll} + \varepsilon_{M'}$, $\varepsilon_M$ = Toleranzwert für das Drehmoment) gesetzt wird:

$$\Delta M_b = M - (M_{soll} + \varepsilon_M)$$

Fig.1

# Fig.2

$M_{soll} + \varepsilon_M + \Delta M_b$

$M$

$M_{soll}$

$M_{soll} - \varepsilon_M + \Delta M_b$

0

t

0

t

$\Delta M_b$

# Fig.3

a
$\alpha_a$

$U_4$

$U_5$

i

$U_3$

$\Psi$

$\beta_a$

0

$U_2$

$U_6$

$U_0$

b

$U_1$

c